# EUROPEAN PATENT SPECIFICATION

(11) **EP 3 895 594 B1**
(45) Date of publication and mention of the grant of the patent: **08.11.2023**
(21) Application number: 21162838.3
(22) Date of filing: 16.03.2021
(51) Int. Cl.: A47L 15/42, D06F 58/20, A47L 15/00, D06F 103/50, D06F 105/00, D06F 105/28

(54) **HOUSEHOLD APPLIANCE COMPRISING A HEAT PUMP, AND METHOD OF OPERATING SUCH HOUSEHOLD APPLIANCE**
HAUSHALTSGERÄT MIT EINER WÄRMEPUMPE UND VERFAHREN ZUM BETREIBEN EINES SOLCHEN HAUSHALTSGERÄTES
APPAREIL MÉNAGER COMPORTANT UNE POMPE À CHALEUR ET PROCÉDÉ DE FONCTIONNEMENT D'UN TEL APPAREIL MÉNAGER

(30) Priority: 17.04.2020 EP 20382314
(43) Date of publication of application: 20.10.2021
(73) Proprietor: BSH Hausgeräte GmbH, 81739 München (DE)
(72) Inventor: Capablo Sese, Joaquin Jesus, 50003 Zaragoza (ES)

(56) References cited:
- EP-A1- 2 468 945
- EP-A1- 2 728 052
- WO-A1-2005/031231
- WO-A1-2013/045363
- WO-A1-2014/146704

## Description

The invention relates to a household appliance comprising a heat pump having a closed refrigerant circuit for guiding a flow of a refrigerant, and integrated into the refrigerant circuit a heat source for providing heating by condensing the refrigerant, an expansion device for expanding the flow and located downstream of the heat source, a heat sink for providing cooling by evaporating the refrigerant, and located downstream of the expansion device, and a compressor system for driving and compressing the flow and located downstream of the heat sink and upstream of the heat source, the household appliance also comprising a control device for controlling operation of the household appliance and a heating device for providing heating to the heat pump, the household appliance further comprising a sensor system for determining a superheating temperature of the refrigerant as a difference between an outlet temperature of the refrigerant at an outlet of the heat sink and an inlet temperature of the refrigerant at an inlet of the heat sink as the refrigerant exits the heat sink, and the control device being connected to the sensor system and the heating device, and being configured for operating the heating device in dependence of the superheating temperature, wherein the compressor system comprises an accumulator for accumulating refrigerant received from the heat sink, and a compressor located downstream of the accumulator for driving and compressing the refrigerant, and wherein the heating device is arranged for providing heating to the accumulator.

The invention also relates to a method of operating such household appliance.

Document EP 2 728 052 A1 discloses a household appliance of the generic type as defined above.

A heat pump of a type as included in the household appliance of the generic type as defined above is disclosed in an article entitled "A combined Dual Hot-Gas Bypass Defrosting method with accumulator heater for an air-to-air heat pump in cold region" by Jaehong Kim et al., Applied Energy 147 (2013) 344-352. The heat pump disclosed belongs to a climatization machine and is designed for enabling quick heating-up of the compressor system and the refrigerant circuit by bypassing the heat source, the expansion device, and the heat sink, and providing heating to the compressor system, upon start-up.

Document EP 2 728 052 A1 specifically discloses a washing machine comprising a chamber for receiving goods to be washed, a tank adapted to contain a liquid, a heat pump comprising a first heat exchanger, a second heat exchanger, a compressor and a pressure lowering device forming a circuit comprising a heat transfer fluid, the first heat exchanger being adapted to cool said heat transfer fluid and to heat water to be used in the chamber, the second heat exchanger being adapted to heat said heat transfer fluid and to cool the liquid contained in the tank. The washing machine further comprises an additional heat exchanger connected between the outlet of the second heat exchanger and the inlet of the compressor and configured to release heat to the heat transfer fluid thereat.

Document EP 2 468 945 A1 discloses a laundry dryer comprising an outer casing and, inside the casing, a laundry container structured for housing the laundry to be dried, and a closed-circuit, hot-air generator structured to circulate through the laundry container a stream of hot air having a low moisture level; the hot-air generator being provided with a heat-pump assembly structured to rapidly cool the airflow coming out from the laundry container for condensing and retaining the surplus moisture in said airflow, and then to rapidly heat the airflow returning back into the laundry container; the heat-pump assembly comprising: an evaporator and a condenser; refrigerant flow-rate adjusting means which are structured for adjusting, respectively, the temperature or the pressure of the low-pressure refrigerant at refrigerant-outlet of the evaporator; detecting means to measure the current value of at least one physical quantity of said laundry dryer associated to the heat-pump assembly; and finally an auxiliary refrigerant/refrigerant heat exchanger which is crossed by the high-pressure refrigerant directed towards the refrigerant expansion device, and by the low-pressure refrigerant coming out of the refrigerant-outlet of the evaporator, and which is structured for transferring heat from the high-pressure refrigerant to the low-pressure refrigerant so to heat up said low-pressure refrigerant.

Document WO 2014/146704 A1 discloses an appliance for drying laundry, having a heat pump system, the heat pump system having a refrigerant circuit, the appliance comprising: an articles drying chamber for drying the articles using a drying medium; a first heat exchanger for heating a refrigerant and cooling the drying medium; a second heat exchanger for cooling the refrigerant and heating the drying medium; a refrigerant expansion device arranged in the refrigerant circuit between the second heat exchanger and the first heat exchanger, and a compressor arranged in the refrigerant circuit between the first heat exchanger and the second heat exchanger.

In a heat pump as defined above the heat sink is provided for fully evaporating the refrigerant that enters it as a liquid or as a mixture of liquid and gas. The compressor system is also provided to compress the refrigerant in gaseous state only. For avoiding liquid refrigerant to reach a compressor in a compressor system a compressor system usually includes an accumulator which is a vessel for receiving refrigerant incoming from the heat sink and includes a siphon-like structure that retains any incoming liquid at least to some extent and allows gaseous refrigerant only to proceed to the compressor. Yet such accumulator has a limited capacity for storing liquid refrigerant only. Adverse operating conditions, particularly low ambient temperature, may lead to the accumulator being completely filled with liquid to its full capacity, so that liquid refrigerant may proceed to the compressor. The low compressibility of liquid refrigerant may impair operation of the compressor heavily, for example by explosive evaporation as the refrigerant is compressed, which is known as "slugging", and generates excessive operating noise and may even result in damage to the compressor.

A measure known and widely used for keeping liquid refrigerant from reaching a compressor system is designing and allowing a heat sink to not only fully evaporate the refrigerant circulating therethrough but also heat the refrigerant to a temperature above the boiling temperature of the refrigerant under the pressure existent in the heat sink. Such measure is conventionally designated as "superheating" and is measured by determining the temperature difference between the actual temperature of the gaseous refrigerant and its boiling temperature at the given pressure in the heat sink. This temperature difference in designated as the "superheating temperature". Yet, the superheating requires provision of related volume of the heat sink while it does not contribute much to the heat pumping process. Therefore, there is a desire of keeping the superheating rather low. In its turn this makes the heat pump prone to impairing operation of the compressor system by accidentally incoming liquid refrigerant.

It is an object of the invention to provide a household appliance of the generic type as defined above wherein precaution is taken for controlling the flow of refrigerant to the compressor system and improving protection from liquid refrigerant being compressed under adverse operating conditions.

This problem is solved in accordance with the invention by providing a household appliance of the generic type as defined above and a method of operating such household appliance as defined in the respective independent claims 1 and 12.

Accordingly the invention provides a household appliance comprising a heat pump having a closed refrigerant circuit for guiding a flow of a refrigerant, and integrated into the refrigerant circuit a heat source for providing heating by condensing the refrigerant, an expansion device for expanding the flow and located downstream of the heat source, a heat sink for providing cooling by evaporating the refrigerant, and located downstream of the expansion device, and a compressor system for driving and compressing the flow and located downstream of the heat sink and upstream of the heat source, the household appliance also comprising a control device for controlling operation of the household appliance and a heating device for providing heating to the heat pump, the household appliance which further comprises a sensor system for determining a superheating temperature of the refrigerant as a difference between an outlet temperature of the refrigerant at an outlet of the heat sink and an inlet temperature of the refrigerant at an inlet of the heat sink as the refrigerant exits the heat sink, and the control device is connected to the sensor system and the heating device, and configured for operating the heating device in dependence of the superheating temperature. Further, the compressor system comprises an accumulator for accumulating refrigerant received from the heat sink, and a compressor located downstream of the accumulator for driving and compressing the refrigerant, and wherein the heating device is arranged for providing heating to the accumulator.

The invention also provides a method of operating a household appliance according to the invention wherein the sensor system is operated to continuously monitor the superheating temperature, and the heating device is engaged if the superheating temperature is lower than a predetermined threshold, and the heating device is disengaged if the superheating temperature is equal to or higher than the predetermined threshold.

The invention accomplishes control of the flow of refrigerant to the compressor system by determining the superheating temperature of this flow and controlling engagement of the heating device in dependence upon the superheating temperature. The invention introduces operation of a novel heating device into regular operation of a heat pump, by applying the heating device to controlling the superheating temperature as it is established in operating the heat pump according to its predetermined purpose.

The invention may be applied advantageously in a heat pump wherein the superheating temperature is relatively low by design. In such heat pump the operating conditions may be controlled so as to preserve the design superheating temperature over a wide range of operating conditions and ascertain keeping liquid refrigerant away from being subjected to compression.

The invention may also be applied advantageously in a heat pump that is provided to operate under a large variation of operating conditions, including operation at rather low ambient temperatures - for example, temperatures under 10° C and even as low as 5° C. Also in such conditions the invention assists in controlling and preserving superheating temperature at a level sufficient to avoid liquid refrigerant from being subjected to compression, and slugging in the compressor system that is unacceptably noisy at best, and detrimental to the compressor system at worst.

By applying the invention advantage may also be taken of reducing the volume of the accumulator that precedes the compressor in a heat pump's refrigerant circuit. Besides its phase separating and baffling function such accumulator is dead space from a thermodynamic point of view and requires additional refrigerant to be entered into the refrigerant circuit. Such may be undesirable in view of saving unnecessary expense of climate-critical compounds such as fluorinated hydrocarbon compounds, and in view of requirements for extended fire protection when using a hydrocarbon such as propane (R290) as a refrigerant in an amount exceeding a legally prescribed limit.

In accordance with the invention the sensor system is configured for determining the superheating temperature as a difference between an outlet temperature of the refrigerant at an outlet of the heat sink and an inlet temperature of the refrigerant at an inlet of the heat sink. A heat pump implementing the reverse Rankine cycle as presently operates the heat sink principally by evaporating the refrigerant which enters the heat sink as a dual-phase compound including both liquid and gaseous refrigerant. Disregarding any pressure drop caused by the flowing refrigerant such evaporation occurs at constant temperature. Pickup of heat by the gaseous refrigerant is low in comparison to pickup of heat by phase transition from liquid to gas, implying that the temperature of the refrigerant will rise only gradually prior to exiting the heat sink. Yet, such rise of temperature which is conventionally termed as "superheating" is of some interest as it ascertains that the refrigerant is totally evaporated upon exiting the heat sink and entering the compressor system. Thus, there is no danger that liquid refrigerant gets compressed which could result in rather quick, even explosive, evaporation which would generate both undesirable noise and undesirable mechanical strain to the compressor system and other components of the heat pump. Therefore, controlling and preserving the superheating temperature is a powerful means for ascertaining smooth operation of a heat pump.

In accordance with the invention the compressor system comprises an accumulator for accumulating refrigerant received from the heat sink, and a compressor located downstream of the accumulator for driving and compressing the refrigerant, and wherein the heating device is arranged for providing heating to the accumulator. Given the common function of the accumulator as a phase-separator the accumulator is a natural selection for adding heating capability to evaporate liquid refrigerant that has been accumulating in the accumulator.

In accordance with a preferred embodiment of the invention the sensor system comprises a first temperature sensor placed in the refrigerant circuit at the outlet, and a second temperature sensor placed in the refrigerant circuit at the inlet. Thereby simple means are applied to obtain the desired superheating temperature data.

In accordance with a further preferred embodiment of the invention the control device is configured for having engaged the heating device if the superheating temperature is lower than a predetermined threshold and for having the heating device disengaged if the superheating temperature is equal to or higher than the predetermined threshold. Thereby the control of the superheating temperature is accomplished with simple and reliable means. In accordance with an additional preferred embodiment of the invention the predetermined threshold is set at 5 K, emphasizing the fine control that the invention may apply, and also ascertaining that the heat sink needs not to be provided in excess dimensions for offering sufficient heating capability to obtain a sufficiently high superheating temperature.

In accordance with an even more preferred development of the previously defined embodiment of the invention the heating device includes an electric heater formed as a strip, particularly of metallic wire or tubing, and wound around the accumulator. This enables a retrofit to the accumulator which may be added to the accumulator after its complete manufacturing, and thereby enables application of more or less any pre-fabricated accumulator.

In accordance with yet an additional preferred embodiment of the invention the heating device is an induction heater, wherein the accumulator is made from ferromagnetic material. Thereby profit may be obtained by coupling the heating device to a component manufactured from a cheap and conventional material such as ferromagnetic steel, profiting also from the excellent controllability and variability of the inductive heat source, profiting further from the fact that the heat is generated as close as possible to the refrigerant which is to receive it in accordance with the invention, and profiting additionally from the absence of local hot spots as might occur with a conventional resistive heater.

In accordance with still another preferred embodiment of the invention the heat pump is coupled to a process air circuit which circulates process air through a treatment chamber by a blower for being cyclically heated by the heat source and cooled by the heat sink, enabling application of the invention to various purposes that a household may provide, such as drying and climatising. This process air circuit may be closed, partly open, or fully open.

In particular the household appliance according to the previously defined embodiment of the invention is embodied as an appliance for drying household items placed in the treatment chamber.

A first exemplary and preferred embodiment of such appliance for drying household items is a laundry treatment machine adapted for drying household items which are pieces of laundry. Such laundry treatment machine may be a dedicated laundry dryer, but it may also be a washer-dryer which is provided to provide both washing and drying operations for laundry treatment. A second exemplary and preferred embodiment of such appliance for drying household items is a dishwasher for washing and drying household items which are pieces of tableware.

Preferred embodiments will now be described with reference to the attached drawing wherein the Figures exhibit as follows:
Fig. 1 a schematic section through a household appliance;
Fig. 2 (not forming part of the invention) a section of a heat sink with a heating device;
Fig. 3 a section of an accumulator with a heating device;
Fig. 4 a schematic section of a laundry dryer; and
Fig. 5 a schematic section of a dishwasher.

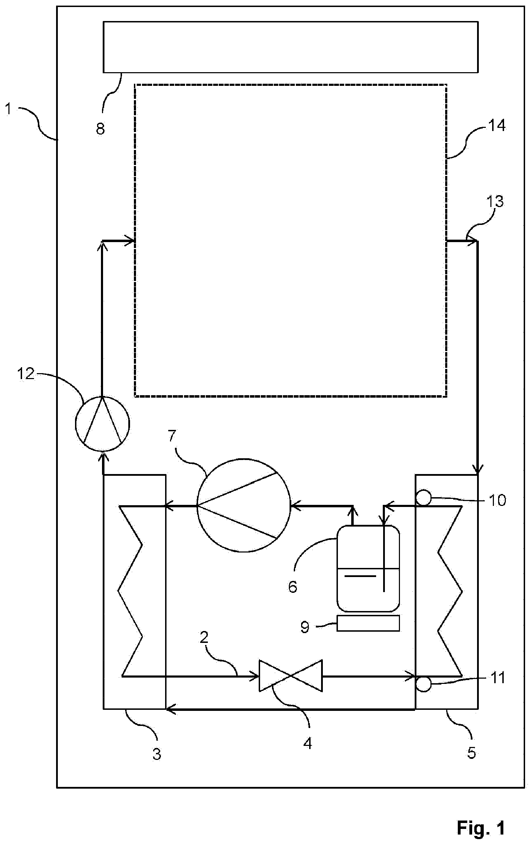

According to Fig. 1 a household appliance 1 comprises a heat pump having a closed refrigerant circuit 2 for guiding a flow of a refrigerant, and integrated into the refrigerant circuit 2 a heat source 3 for providing heating by condensing the refrigerant, an expansion device 4 for expanding the flow and located downstream of the heat source 3, a heat sink 5 for providing cooling by evaporating the refrigerant, and located downstream of the expansion device 4, and a compressor system 6, 7 composed of an accumulator 6 and a compressor 7 for driving and compressing the flow and located downstream of the heat sink 5 and upstream of the heat source 3. Insofar the heat pump has all features of the commonly known heat pump implementing the inverse Rankine cycle for pumping het from heat sink 4 to heat source 3. Both heat source 3 and heat sink 5 are heat exchangers, and provided for exchanging heat with process air flowing through. Heat sink 5 is particularly provided to extract humidity from the process air flowing through by cooling and condensation. This of course requires means for collecting condensate for disposal and associated to heat sink 5 suitably, but such means as commonly known are not shown in Fig. 1 for the sake of simplicity.

Accumulator 6 serves as a reservoir for storing part of the refrigerant, and also as a phase separator for separating liquid refrigerant that enters accumulator 6 because of incomplete evaporation in heat sink 5 from gaseous refrigerant that desirably emerges from heat sink 5 only. Compressor 7 is provided to compress gaseous refrigerant; if liquid refrigerant enters compressor 7 it may evaporate uncontrollably during compression, causing excessive noise and possibly even damaging compressor 7 and other components of the heat pump. Accordingly, accumulator 6 is shown, if only schematically, with a siphon-like structure and filled with liquid refrigerant to a certain level.

The household appliance 1 of Fig. 1 also comprises a control device 8 for controlling operation of the household appliance 1. Control device 8 is shown as a black box in Fig. 1. Connections between the control device 8 and other components of the household appliance 1 are also not shown for the sake of simplicity. Control device 8 includes functions of a display device providing operational information to a user, of an input device for receiving user's operational commands and data as possibly relating to selection of specific operational processes or operational parameters, and of a real control device for coordinating all components of household appliance 1 in performing their assigned functions in operating household appliance 1 according to user's needs and desires.

The household appliance 1 of Fig. 1 further comprises a heating device 9 for providing heating to the heat pump. The household appliance 1 in addition comprises a sensor system 10, 11 including a first temperature sensor 10 placed in the refrigerant circuit 2 at an outlet of heat sink 5, and a second temperature sensor 11 placed in the refrigerant circuit 2 at an inlet of heat sink 5. Inlet and outlet of heat sink 5 may be determined by referring to the arrows composing refrigerant circuit 2, these arrows indicating directions of flow of the refrigerant. Sensor system 10, 11 is configured for determining the superheating temperature as a difference between an outlet temperature of the refrigerant at the outlet of heat sink 5 and the inlet temperature of the refrigerant at an inlet of the heat sink 5. For determining the superheating temperature of the refrigerant as it exits heat sink 5, control device 8 is connected to sensor system 10, 11 and heating device 9, and configured for operating heating device 9 in dependence of the superheating temperature.

Specifically control device 8 is configured for having engaged heating device 9 if the superheating temperature is lower than a predetermined threshold and for having heating device 9 disengaged if the superheating temperature is equal to or higher than the predetermined threshold. This predetermined threshold is presently set at 5 K.

As household appliance 1 is operated sensor system 10, 11 is operated to continuously monitor the superheating temperature. Heating device 9 is engaged if the superheating temperature is lower than a predetermined threshold, and heating device 9 is disengaged if the superheating temperature is equal to or higher than the predetermined threshold. The predetermined threshold may be set as low as 5 K.

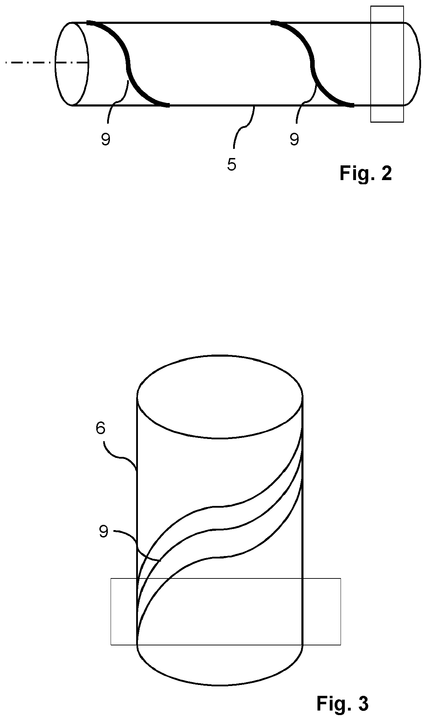

As shown in Fig. 2, which does not form part of the present invention, heating device 9 may be arranged for providing heat to heat sink 5, Fig. 2 showing a section of a tube guiding refrigerant as part of heat sink 5, and heating device 9 formed by coiling a resistive heater formed as a metal strip, particularly a wire or tube, around heat sink's 5 tube.

Alternatively, and as shown in Fig. 3, heating device 9 is attached to the compressor system 6, 7. The compressor system 6, 7 comprises an accumulator 6 for accumulating refrigerant received from heat sink 5, and a compressor 7 located downstream of accumulator 6 for driving and compressing the refrigerant. Heating device 9 is attached to accumulator 6 of which a cylindrical section is shown in Fig. 3. Heating device 9 may be a resistive heater much similar to the one as shown in Fig. 2, heating device 9 formed as a strip and wound around accumulator 6.

With particular preference heating device 9 of Fig. 3 is an induction heater 9, shown as a wire coil in Fig. 3 and providing energy to the ferromagnetic construction material of accumulator 6 through a variable magnetic field. Such induction heater 9 may be attached to any suitable component of the heat pump such as heat sink 5, accumulator 6, and compressor 7, as long as the selected component is made from ferromagnetic material.

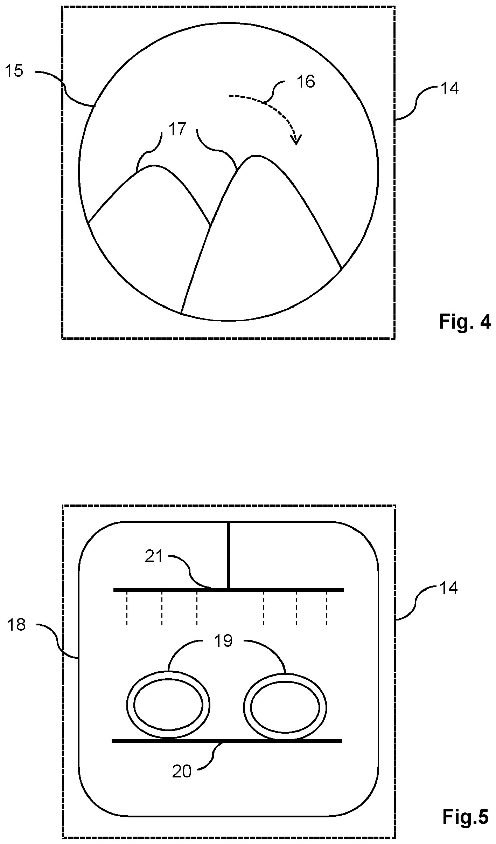

As already outlined with reference to Fig. 1 the heat pump is coupled to a process air circuit 13 which circulates process air through a treatment chamber 14 by a blower 12 for being cyclically heated by heat source 3 and cooled by the heat sink 5. Treatment chamber 14 has been left unspecified in Fig. 1. Specific embodiments of treatment chamber 14 are shown in Figs. 4 and 5.

According to Figs. 4 and 5 which present details of embodiments of treatment chamber 14 household appliance 1 is embodied as an appliance for drying household items 17, 19 placed in treatment chamber 14.

According to Fig. 4 household appliance 1 is embodied as a laundry treatment machine adapted for drying household items 17 which are pieces of laundry 17. To this end treatment chamber 14 includes a drum 15 which is rotatable as shown by dashed arrow 16 for tumbling pieces of laundry 17 as they are dried by the process air flow traversing drum 15 as it is rotated. This household appliance 1 may be embodied as a laundry dryer 1 dedicated to drying laundry only, or as a washer-dryer which is provided both for washing and drying.

According to Fig. 5 household appliance 1 is embodied as a dishwasher for washing and drying household items 17, 19 which are pieces of tableware 19, and shown as plates 19 placed in Fig. 5. Treatment chamber 14 is a washing compartment 18 wherein the plates 19 are placed upon a tray 20 and washed by spraying suds or water from a rotatable spray arm 21. Suds and water are indicated as dashed lines emerging from spray arm 21.

As household appliance 1 is operated sensor system 10, 11 is operated to continuously monitor the superheating temperature. Heating device 9 is engaged if the superheating temperature is lower than a predetermined threshold, and heating device 9 is disengaged if the superheating temperature is equal to or higher than the predetermined threshold. The predetermined threshold may be set as low as 5 K.

The invention accomplishes control of the flow of refrigerant to compressor system 6, 7 by determining the superheating temperature of this flow, and controlling engagement of heating device 9 in dependence upon the superheating temperature. The invention introduces operation of a novel heating device 9 into regular operation of a heat pump, by applying heating device 9 to controlling the superheating temperature as it is established in operating the heat pump according to its predetermined purpose.

### LIST OF REFERENCE NUMERALS

- 1: Household appliance
- 2: Refrigerant circuit
- 3: Heat source
- 4: Expansion device
- 5: Heat sink
- 6: Accumulator
- 7: Compressor
- 8: Control device
- 9: Heating device
- 10: First temperature sensor
- 11: Second temperature sensor
- 12: Blower
- 13: Process Air circuit
- 14: Treatment chamber
- 15: Drum
- 16: Dotted arrow
- 17: Laundry
- 18: Washing chamber
- 19: Dish
- 20: Tray
- 21: Spray arm

## Claims

1. A household appliance (1) comprising a heat pump having a closed refrigerant circuit (2) for guiding a flow of a refrigerant, and integrated into the refrigerant circuit (2) a heat source (3) for providing heating by condensing the refrigerant, an expansion device (4) for expanding the flow and located downstream of the heat source (3), a heat sink (5) for providing cooling by evaporating the refrigerant, and located downstream of the expansion device (4), and a compressor system (6, 7) for driving and compressing the flow and located downstream of the heat sink (5) and upstream of the heat source (3), the household appliance (1) also comprising a control device (8) for controlling operation of the household appliance (1) and a heating device (9) for providing heating to the heat pump, the household appliance (1) further comprising a sensor system (10, 11) for determining a superheating temperature of the refrigerant as a difference between an outlet temperature of the refrigerant at an outlet of the heat sink (5) and an inlet temperature of the refrigerant at an inlet of the heat sink (5) as the refrigerant exits the heat sink (5), and the control device (8) being connected to the sensor system (10, 11) and the heating device (9), and being configured for operating the heating device (9) in dependence of the superheating temperature, **characterized in that** the compressor system (6, 7) comprises an accumulator (6) for accumulating refrigerant received from the heat sink (5), and a compressor (7) located downstream of the accumulator (6) for driving and compressing the refrigerant, and wherein the heating device (9) is arranged for providing heating to the accumulator (6).

2. The household appliance (1) according to claim 1, wherein the sensor system (10, 11) comprises a first temperature sensor (10) placed in the refrigerant circuit (2) at the outlet, and a second temperature sensor (11) placed in the refrigerant circuit (2) at the inlet.

3. The household appliance (1) according to one of the preceding claims, wherein the control device (8) is configured for having engaged the heating device (9) if the superheating temperature is lower than a predetermined threshold and for having the heating device (9) disengaged if the superheating temperature is equal to or higher than the predetermined threshold.

4. The household appliance (1) according to claim 3, wherein the predetermined threshold is set at 5 K.

5. The household appliance (1) according to claim 1, wherein the heating device (9) includes an electric heater formed as a strip and wound around the accumulator (6).

6. The household appliance (1) according to one of the preceding claims, wherein the heating device (9) is an induction heater (9), wherein the accumulator (6) is made from ferromagnetic material.

7. The household appliance (1) according to one of the preceding claims, wherein the heat pump is coupled to a process air circuit (13) which circulates process air through a treatment chamber (14) by a blower (12) for being cyclically heated by the heat source (3) and cooled by the heat sink (5).

8. The household appliance (1) according to claim 7, which is embodied as an appliance for drying household items (17, 19) placed in the treatment chamber (14).

9. The household appliance (1) according to claim 8, which is embodied as a laundry treatment machine adapted for drying household items (17, 19) which are pieces of laundry (17).

10. The household appliance (1) according to claim 9, which is embodied as a laundry dryer.

11. The household appliance (1) according to claim 8, which is embodied as a dishwasher for washing and drying household items (17, 19) which are pieces of tableware (19).

12. A method of operating a household appliance (1) according to one of the preceding claims, wherein the sensor system (10, 11) is operated to continuously monitor the superheating temperature, and the heating device (9) is engaged if the superheating temperature is lower than a predetermined threshold, and the heating device (9) is disengaged if the superheating temperature is equal to or higher than the predetermined threshold.

13. The method according to claim 12, wherein the predetermined threshold is set at 5 K.

## Patentansprüche

1. Haushaltsgerät (1), das eine Wärmepumpe umfasst, die einen geschlossenen Kühlmittelkreislauf (2) zum Leiten einer Kühlmittelströmung und eine Wärmequelle (3) zum Erhitzen durch Kondensieren des Kühlmittels, eine stromabwärts von der Wärmequelle (3) liegende Expansionsvorrichtung (4) zum Expandieren der Strömung, einen stromabwärts von der Expansionsvorrichtung (4) liegenden Kühlkörper (5) zum Kühlen durch Verdampfen des Kühlmittels und ein Verdichtersystem (6, 7) zum Beschleunigen und Verdichten der Strömung stromabwärts von dem Kühlkörper (5) und stromaufwärts von der Wärmequelle (3) aufweist, die in den Kühlmittelkreislauf (2) integriert sind, wobei das Haushaltsgerät (1) auch eine Steuervorrichtung (8) zum Steuern des Betriebs des Haushaltsgeräts (1) und eine Heizvorrichtung (9) zum Erhitzen der Wärmepumpe umfasst, wobei das Haushaltsgerät (1) ferner ein Sensorsystem (10, 11) zum Bestimmen einer Überhitzungstemperatur des Kühlmittels als Differenz zwischen einer Auslasstemperatur des Kühlmittels an einem Auslass des Kühlkörpers (5) und einer Einlasstemperatur des Kühlmittels an einem Einlass des Kühlkörpers (5) beim Austreten des Kühlmittels aus dem Kühlkörper (5) umfasst und die Steuervorrichtung (8) mit dem Sensorsystem (10, 11) und der Heizvorrichtung (9) verbunden ist und so konfiguriert ist, dass sie die Heizvorrichtung (9) in Abhängigkeit von der Überhitzungstemperatur betreibt, **dadurch gekennzeichnet, dass** das Verdichtersystem (6, 7) einen Dampfdom (6) zum Ansammeln von aus dem Kühlkörper (5) aufgenommenem Kühlmittel und stromabwärts von dem Dampfdom (6) einen Verdichter (7) zum Beschleunigen und Verdichten des Kühlmittels umfasst, und wobei die Heizvorrichtung (9) zum Erhitzen des Dampfdoms (6) angeordnet ist.

2. Haushaltsgerät (1) nach Anspruch 1, wobei das Sensorsystem (10, 11) einen am Auslass in dem Kühlmittelkreislauf (2) angeordneten ersten Temperatursensor (10) und einen am Einlass in dem Kühlmittelkreislauf (2) angeordneten zweiten Temperatursensor (11) umfasst.

3. Haushaltsgerät (1) nach einem der vorhergehenden Ansprüche, wobei die Steuervorrichtung (8) so konfiguriert ist, dass sie die Heizvorrichtung (9) einschaltet, wenn die Überhitzungstemperatur unter einem vorgegebenen Schwellenwert liegt, und die Heizvorrichtung (9) ausschaltet, wenn die Überhitzungstemperatur mindestens dem vorgegebenen Schwellenwert entspricht.

4. Haushaltsgerät (1) nach Anspruch 3, wobei der vorgegebene Schwellenwert auf 5 K eingestellt ist.

5. Haushaltsgerät (1) nach Anspruch 1, wobei die Heizvorrichtung (9) eine elektrische Heizung aufweist, die als Band ausgebildet und um den Dampfdom (6) gewickelt ist.

6. Haushaltsgerät (1) nach einem der vorhergehenden Ansprüche, wobei es sich bei der Heizvorrichtung (9) um eine Induktionsheizung (9) handelt, wobei der Dampfdom (6) aus ferromagnetischem Material hergestellt ist.

7. Haushaltsgerät (1) nach einem der vorhergehenden Ansprüche, wobei die Wärmepumpe mit einem Prozessluftkreislauf (13) gekoppelt ist, der über ein Gebläse (12) Prozessluft durch eine Behandlungskammer (14) umwälzt, damit sie zyklisch von der Wärmequelle (3) erhitzt und von dem Kühlkörper (5) gekühlt wird.

8. Haushaltsgerät (1) nach Anspruch 7, das als Gerät zum Trocknen von Haushaltsgegenständen (17, 19) realisiert ist, die in die Behandlungskammer (14) gelegt werden.

9. Haushaltsgerät (1) nach Anspruch 8, das als Wäschebehandlungsmaschine realisiert ist, die zum Trocknen von Haushaltsgegenständen (17, 19) ausgelegt ist, bei denen es sich um Wäschestücke (17) handelt.

10. Haushaltsgerät (1) nach Anspruch 9, das als Wäschetrockner realisiert ist.

11. Haushaltsgerät (1) nach Anspruch 8, das als Geschirrspüler zum Waschen und Trocknen von Haushaltsgegenständen (17, 19) realisiert ist, bei denen es sich um Geschirrteile (19) handelt.

12. Verfahren zum Betreiben eines Haushaltsgeräts (1) nach einem der vorhergehenden Ansprüche, wobei das Sensorsystem (10, 11) zum ständigen Überwachen der Überhitzungstemperatur betrieben wird und die Heizvorrichtung (9) eingeschaltet wird, wenn die Überhitzungstemperatur unter einem vorgegebenen Schwellenwert liegt, und ausgeschaltet wird, wenn die Überhitzungstemperatur mindestens dem vorgegebenen Schwellenwert entspricht.

13. Verfahren nach Anspruch 12, wobei der vorgegebene Schwellenwert auf 5 K eingestellt wird.

## Revendications

1. Appareil électroménager (1) comprenant une pompe à chaleur qui comprend un circuit fermé de fluide frigorigène (2) pour guider un écoulement d'un fluide frigorigène et, intégrés dans le circuit de fluide frigorigène (2), une source de chaleur (3) pour fournir de la chaleur en condensant le fluide frigorigène, un dispositif de détente (4) pour détendre le flux situé en aval de la source de chaleur (3), un puits thermique (5) pour fournir un refroidissement en évaporant le fluide frigorigène, situé en aval du dispositif de détente (4), et un système de compresseur (6, 7) pour entraîner et comprimer l'écoulement, situé en aval du puits thermique (5) et en amont de la source de chaleur (3),
l'appareil électroménager (1) comprenant aussi un dispositif de commande (8) pour commander le fonctionnement de l'appareil ménager (1) et un dispositif de chauffage (9) pour fournir un chauffage à la pompe de chaleur, et
l'appareil électroménager (1) comprenant en outre un système de capteur (10, 11) pour déterminer une température de surchauffe du fluide frigorigène en tant qu'une différence entre une température de sortie du fluide frigorigène au niveau d'une sortie du puits thermique (5) et une température d'entrée du fluide frigorigène à une entrée du puits thermique (5) lorsque le fluide frigorigène sort du puits thermique (5), et
le dispositif de commande (8) étant connecté au système de capteur (10, 11) et au dispositif de chauffage (9), et étant configuré pour commander le dispositif de chauffage (9) en fonction de la température de surchauffe,
**caractérisé en ce que** le système de compresseur (6, 7) comprend un accumulateur (6) pour accumuler le fluide frigorigène reçu du puits thermique (5), et un compresseur (7) situé en aval de l'accumulateur (6) pour entraîner et comprimer le fluide frigorigène, et dans lequel le dispositif de chauffage (9) est agencé pour fournir de la chaleur à l'accumulateur (6).

2. Appareil électroménager (1) selon la revendication 1, dans lequel le système de capteur (10, 11) comprend un premier capteur de température (10) disposé dans le circuit de fluide frigorigène (2) à la sortie, et un deuxième capteur de température (11) disposé dans le circuit de fluide frigorigène (2) au niveau de l'entrée.

3. Appareil électroménager (1) selon l'une des revendications précédentes, dans lequel le dispositif de commande (8) est configuré pour enclencher le dispositif de chauffage (9) si la température de surchauffe est inférieure à un seuil prédéterminé et pour désactiver le dispositif de chauffage (9) si la température de surchauffe est supérieure ou égale au seuil prédéterminé.

4. Appareil électroménager (1) selon la revendication 3, dans lequel le seuil prédéterminé est fixé à 5 K.

5. Appareil électroménager (1) selon la revendication 1, dans lequel le dispositif de chauffage (9) inclut un élément chauffant électrique constitué sous forme d'un ruban et enroulé autour de l'accumulateur (6).

6. Appareil électroménager (1) selon l'une des revendications précédentes, dans lequel le dispositif de chauffage (9) est un élément chauffant à induction (9), dans lequel l'accumulateur (6) est constitué d'un matériau ferromagnétique.

7. Appareil électroménager (1) selon l'une des revendications précédentes, dans lequel la pompe à chaleur est couplée à un circuit d'air de traitement (13) qui met en circulation de l'air de traitement à travers une chambre de traitement (14) par un ventilateur (12) de façon à être chauffé cycliquement par la source de chaleur (3) et refroidi par le puits thermique (5).

8. Appareil électroménager (1) selon la revendication 7, qui est conçu sous forme d'un appareil pour sécher des articles ménagers (17, 19) placés dans la chambre de traitement (14).

9. Appareil électroménager (1) selon la revendication 8, qui est conçu sous forme d'une machine de traitement du linge adaptée pour sécher des articles ménagers (17, 19) qui sont des pièces de linge (17).

10. Appareil électroménager (1) selon la revendication 9, qui est conçu sous forme d'un sèche-linge.

11. Appareil électroménager (1) selon la revendication 8, qui est conçu sous forme d'un lave-vaisselle pour laver et sécher des articles ménagers (17, 19) qui sont des pièces de vaisselle (19).

12. Procédé de fonctionnement d'un appareil électroménager (1) selon l'une des revendications précédentes, dans lequel le système de capteur (10, 11) est activé de façon à surveiller en continu la température de surchauffe, et le dispositif de chauffage (9) est enclenché si la température de surchauffe est inférieure à un seuil prédéterminé, et le dispositif de chauffage (9) est désactivé si la température de surchauffe est supérieure ou égale au seuil prédéterminé.

13. Procédé selon la revendication 12, dans lequel le seuil prédéterminé est fixé à 5 K.
